# EUROPEAN PATENT APPLICATION

(11) **EP 1 363 470 A1**
(43) Date of publication of application: **19.11.2003**
(21) Application number: 02253473.9
(22) Date of filing: 17.05.2002
(51) Int. Cl.: H04Q 7/32

(54) **Portable wireless communication system**

(71) Applicant: Infotech Software Limited, London WC2E 9RZ (FR)
(72) Inventor: Tarighi, Laleh, London WC2E 9RZ (GB); Moghadam, Hossein, London WC2E 9RZ (GB); Ardalan, Sasan, London WC2E 9RZ (GB); Hamedani, Mohammad, Infotech Software Limited, London WC2E 9RZ (GB)
(74) Representative: Carter, Stephen John

(57) **Abstract**

The invention provides a system for wireless transmission of data, including position data. The system includes a hand held digital computer (2), a position-locating device (6) providing position information to the digital computer and a VHF and/or UHF radio frequency transmitter (4). A radio modem (8), having an input for digital data from the hand held digital computer (2) and an output connected to the transmitter (4), includes a modulator for converting digital from the computer (2) into a modulated analogue RF signal for transmission.

## Description

The present invention relates to portable wireless communication systems, in particular for sending and receiving data, including for instance position information, at radio frequencies.

Wireless communication is widely used today in many environments to transmit data of various types conveniently and quickly from and to remote locations. The rapidly growing use of wireless cellular phones for sending and receiving both voice and other data content is one example, but there remain many situations in which this form of communication is unreliable or impossible because it relies on the geographical coverage of the cellular system. Radio frequency transmissions, in particular at VHF and UHF frequencies therefore still offer a useful alternative to cellular systems for the transmission of data.

One known approach to radio frequency transmission of data packets adopts the APRS (Automatic Position Reporting System) protocol. This protocol is well known in the art and is most often used to broadcast position information, obtained using a GPS (Global Positioning System) device for instance, or other short messages. Whilst this approach has the advantage that it does not rely on a cellular system, it does not have the same capabilities as the more advanced cellular based systems such as the Wireless Access Protocol (WAP) systems, which provide a more secure, reliable and flexible form of data transmission.

It is a general aim of the present invention to provide a wireless communications system that can offer security, reliability and flexibility comparable with known cellular based systems without being limited by the geographical boundaries of these cellular systems.

Accordingly, in a first aspect the present invention provides a system for wireless transmission of data, including position data, the system comprising:
(i) a hand held digital computer;
(ii) a position-locating device providing position information to the digital computer;
(iii)a VHF and/or UHF radio frequency transmitter; and
(iv) a radio modem having an input for digital data from the hand held digital computer, a modulator for converting digital data from the computer into a modulated analogue RF signal, and an output connected to the transmitter for transmission of said modulated signal.

In preferred forms, the system is also able to receive data, the system having a radio receiver connected to the radio modem and the modem including a demodulator for demodulating a received RF signal and converting it to digital data for input to the digital computer. Conveniently, a radio transceiver can serve as both the radio receiver and transmitter.

Likewise, the modulator and demodulator can be provided as a single component in a known manner. Any of a number of appropriate forms of modulation may be employed, including for example FSK or MSK modulation. MSK ('Minimum Shift Keying') modulation is particularly preferred due to its inherently low BER (bit error ratio) and lower susceptibility to noise.

The hand held digital computer is most preferably of the size commonly referred to as 'palmtop', that can be comfortably held in one hand. This type of computer is often referred to as Personal Digital Assistants (PDA) and examples include the 'PALM III' and 'PALM V' from Palm Computing Inc., which operate the PalmOS platform, and Windows based systems such as Compaq's iPAQ Pocket PCs.

The position-locating device is preferably a GPS ('Global Positioning System') device, although other devices able to give an output representative of a position of the system relative to some frame of reference may be used. Conveniently, the GPS device (or other position location device) may be connected to the digital computer through the radio modem, in order that only a single physical connection to the computer need be made. This approach can be particularly advantageous where, as is often the case with PDAs, the digital computer only has a single output port via which it is able to communicate with external devices.

Many PDAs have what is known as a 'sleep mode', in which the PDA is essentially inactive, but can be woken up (i.e. brought to a fully 'on' state) by one or more different types of input either via its user interface or via a communication port. The radio modem of preferred embodiments of the present invention therefore preferably includes wake-up means for waking the computer from a 'sleep mode' on receipt of an RF signal by the radio receiver. These wake-up means can, for instance, transmit a wake-up signal to a communication port of the PDA to wake it up prior to sending newly received data. It would be possible, for example, to implement this wake-up procedure using the PalmOS Hot Sync feature.

PDAs or the like having such a 'sleep mode', will typically be controlled (e.g. by their software) to switch into the sleep mode automatically after a predetermined period of inactivity. Whilst such operation may be appropriate for embodiments of the present invention, it is advantageous for the PDA to also have an 'always on mode', in which the sleep function is disabled.

The communication system may also include provision for a second digital computer which can be interfaced to the hand held digital computer through the radio modem to receive data from and transmit data to the hand held computer. This second computer can be, for example, a Laptop PC or a Desktop PC or a Network Workstation and is preferably itself connected to a computer or telecommunications network, e.g. the internet. Where the radio modem includes a port, e.g. an RS232 port, for an external GPS system (or other position-location device), this port may conveniently also be used for communication with the second computer.

It is envisaged that a system set up with a second computer in this manner could serve as a base station, the second computer receiving and sending data, for example position data, through the wireless communication system from and to other stations, which may be mobile. If the second computer is connected to the internet, this approach also enable the mobile stations to themselves access the internet via the base station.

According to a second aspect, the invention provides a modem to provide an interface between a hand held digital computer, a radio frequency transmitter and/or receiver and a position locating device, the modem comprising:
(i) an input/output port for connection to a communication port of the digital computer;
(ii) a modulator and/or demodulator for converting digital data to a modulated radio frequency signal and/or for converting a modulated radio frequency signal to digital data;
(iii)an input for data from the position-locating device;
(iv) a switch for selectively connecting (a) the modulator and/or demodulator to said input/output port, or (b) the position locating device input to said input/output port; and
(v) a controller for controlling the operation of the switch.

In a preferred form of the modem according to the second aspect of the invention, the position-locating device, which may for example be a GPS device, is housed within the same casing as the modem itself. Using an 'internal' position location device in this way means it is only necessary for the user to provide a radio transmitter/receiver and the digital computer to construct a complete system.

In the case where an internal position location device is used, there is preferably provided an external indicator to indicate that the position location device has successfully located its position.

Where the position locating device is a GPS device, the facility to provide differential GPS corrections, to obtain higher accuracy positional information, is preferably enabled. Standardly this is achieved by receiving differential data via a radio receiver. Conveniently, in preferred embodiments of the present invention, this data can be received via the same VHF/UHF radio receiver used to receive other data for passing to the handheld computer. In this way, the need for an extra radio receiver for receiving differential GPS is eliminated, reducing cost and also avoiding propagation issues and frequency planning that would be associated with an additional radio receiver.

Where the modem is intended for use in a system employing a PDA, or other hand held computer, having a 'sleep mode' as discussed above, the demodulator may have a 'carrier detect' feature responsive to an RF carrier signal received by the radio receiver. A wake-up signal for the PDA can then be initiated by this 'carrier detect' feature when an RF carrier signal is received. Alternatively, the controller may have a 'packet recognition' feature responsive to demodulated data arriving at the switch from the demodulator and the wake-up signal can be initiated by this 'packet recognition' feature on arrival of demodulated data.

It is desirable for other power consuming components of the system to have a similar "sleep" mode, to conserve power, particularly where the system is battery powered. For instance, the position locating device (e.g. GPS) and the controller would both benefit from this functionality.

In some embodiments of the invention, it may be desired to use the radio transmitter/receiver for voice communication in addition to data communication. In this case, voice communication will often take priority. It is preferred, therefore, that means are provided to over-ride and interrupt data transmission/reception, to allow voice transmission/reception, the data communication re-commencing after the voice communication has ceased.

Where the system is intended to handle more than one type of data, e.g. text data and geographic/map data, it may be desirable of necessary to employ separate applications to handle the different data types. However, the processes necessary to communicate data to other systems are most likely to be common to all data types. It is preferred, therefore, that the communication processes are controlled by a common communication application or engine, even where different applications are used to previously (in the case of transmission) or subsequently (in the case of reception) handle different data types.

One data type that might be handled is geographic data, i.e. data defined by coordinates. In a conventional approach, this would mean registering the geographic coordinates for each point where the drawn line turns an angle. As the data representation of each geographic point (using either Lat-Long or UTM projections) needs 8 bytes, this can result in a large array of data which would be inefficient for transmission over a VHF radio link.

An alternative approach provided by the present invention is for only the geographic coordinates for the centre portion of the area displayed on the screen to saved and all other points to be saved as a 2 byte coordinate of the screen's pixel relative to the centre of the screen. Also, to extract the true geographic coordinates at any given scale, the scale of the area displayed is also preferably saved with high precision. This approach offers significant savings in the volume of data that must be transmitted.

The present invention also provides a number of protocols in accordance with which preferred embodiments of the communication system set forth above operate. These protocols may be implemented in software installed on the digital computer (e.g. PDA) for example.

Accordingly, in a further aspect the invention provides a method for the wireless transmission of a message from a sending station to a receiving station, the method comprising:
(i) at the sending station, dividing the message into a number of discrete data packets;
(ii) sending a data packet by radio transmission from the sending station to the receiving station;
(iii)waiting for acknowledgement from the receiving station that the packet has been received;
(iv) once receipt of the packet has been acknowledged, sending a subsequent packet to the receiving station; and
(v) repeating steps (iii) and (iv) until all of the data packets have been sent.

Each data packet may include, in addition to the message data, a header, comprising data giving information about one or more of, and preferably all of: an address of the receiving station; an address of the sending station; the length of the message data; and the number of data packets into which the message has been divided. Where more than one form of message is to be sent (e.g. text message, GPS data, etc), the header may also include information as to the type of packet. It may also be useful for the header to include provision for indicating whether the message is high or low priority, whether it is a new message or a response to an earlier message or other such type data for the packet.

Each packet also preferably includes check data, which can be used to test the integrity of the packet when it is received at the receiving station. For more secure communication, the transmitted data may be encrypted. Preferably, the complete message is encrypted prior to its division into discrete data packets.

The size of the message data part of each packet need not be fixed, but rather can be set by the sending station - the length of this segment of the packet is then given by the packet header so that the receiving station can adopt the same message data segment length when reconstructing the message. Usually the size of the message data segment of the packet will be between 255 and 32,128 bytes.

If an acknowledgement of safe receipt of any packet is not returned by the receiving station, the sending station may simply alert the user of the sending station by displaying an error message for example. More preferably, however, the packet is re-transmitted automatically. A maximum limit on the number of attempts at re-transmission is preferably placed on the system, however, to prevent it entering an endless loop. Non-acknowledgement can be determined to have occurred either after no reply from the receiving station has been received following a predetermined waiting time, or when a reply is received but that reply is a request for retransmission or is itself unreadable (e.g. due to excessive noise) .

In another aspect, there is provided a method for receiving at a receiving station a message transmitted as a series of radio data packets from a sending station, each packet comprising a message data segment and a header, the header containing information including the address of the intended recipient of the message and the length of the message data segment, the method comprising:
(i) detecting receipt at the receiving station by a radio receiver of the first packet of a new message;
(ii) determining from the packet header whether the receiving station is the intended recipient of the message, and if it is;
(iii)determining from the packet header the length of the message data segment of the packet;
(iv) extracting and storing the message data from the packet; and
(v) transmitting an acknowledgement of receipt of the package to the sending station.

Preferably the packet header also includes an indication of how many subsequent packets of the complete message there are yet to be received. In this way, the receiving station can easily determine when all packets have been received, after which it can reconstruct the complete message and, if applicable, decrypt it.

Each packet preferably also includes check data which can be used by the receiver to test the integrity of the packet. When any data packet is not correctly received, the receiving station preferably transmits a 'not acknowledged' message to the sending station.

The above methods of transmission and reception of messages provide a reliable and secure form of communication across a radio link between specific end points. However, there may be occasions where it is desirable to indiscriminately broadcast a message for reception by any receiver in range. In this case, it is impractical to seek acknowledgement from the receiving stations.

Accordingly in yet a further aspect, the invention provides a method for the wireless broadcast of a message from a sending station, the method comprising:
(i) at the sending station, dividing the message into a number of discrete data packets;
(ii) labelling each packet as a broadcast packet;
(iii)transmitting a first data packet by radio transmission from the sending station;
(iv) transmitting at least one copy of the first data packet after a predetermined delay following transmission of the first data packet; and
(v) transmitting subsequent data packets, the transmission of each subsequent data packet being followed by the transmission of a copy of the packet prior to transmission of the next subsequent data packet.

By sending each packet at least twice in succession, incorrect delivery of the message to a stations can be more readily avoided, even though no positive acknowledgement of receipt is requested.

When a receiving station receives packets of a message labelled as a broadcast message it knows firstly that it can consider itself an intended recipient and secondly that it should not send any acknowledgement. The receiving station will also check for repeat packets and discard any copies of packet that have already been successfully received. Otherwise, the receiving station can operate as it would do when receiving a message explicitly addressed to it.

Communications systems according to embodiments of the present invention are preferably operable, for instance under the control of appropriate software installed in the digital computer element of the system, to operate in accordance with one or more, preferably all of the above described methods.

In addition to the normal receiving and sending of messages and the receiving and sending of broadcast messages, communication systems according to embodiments of the present invention preferably also have the capability to automatically transmit, at predetermined intervals of time, a position report containing information about their location, obtained from the positioning device. In this way, other stations or, for example, a base station can readily track the movements of mobile sending stations for example.

It may also be desirable to provide the capability for a sending station to specifically request the position of another station, as an alternative to, or in addition to the automatic updating described immediately above. More specifically one station may poll another station for its position, the polled station then returning a position report in response.

Even adopting radio communication as an alternative to a cellular approach, there may be occasions where the intended recipient receiving station is beyond the range of the sending station. On such occasions it is desirable to provide one or more repeater stations to relay the message from the sending station to the receiving station. Preferably, the communication system of the present invention has the capability to act as a repeater station. It is particularly preferred that the system can automatically recognise when its services as a repeater station are required and act accordingly. For instance, the system can have a software defined repeater mode, which when activated causes the system to monitor communications between a sending station and a receiving station and to act as a repeater station when there is a communication failure between the stations.

An embodiment of a wireless communication system according to the first aspect of the invention, employing an embodiment of a modem according to the second aspect of the invention is described below, by way of example, with reference to the accompanying drawings, in which:
Fig. 1 illustrates schematically the components of the wireless communication system;
Fig. 2 is a block diagram illustrating the main components of the modem used in the system of Fig. 1;
Fig. 3 illustrates an embodiment of a message transmission protocol;
Fig. 4 illustrates an embodiment of a message reception protocol;
Fig 5. illustrates an embodiment of a message broadcast protocol;
Fig. 6 illustrates an embodiment of a position reporting protocol; and
Fig. 7 illustrates an embodiment of a smart repeater protocol.

The wireless communication system described below provides an integrated secure encrypted messaging and position 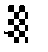 tracking service based on a Palm-size PDA and a VHF/UHF radio. As such it can provide reliable communications even in rural and unpopulated areas that are not covered by cellular phone systems.

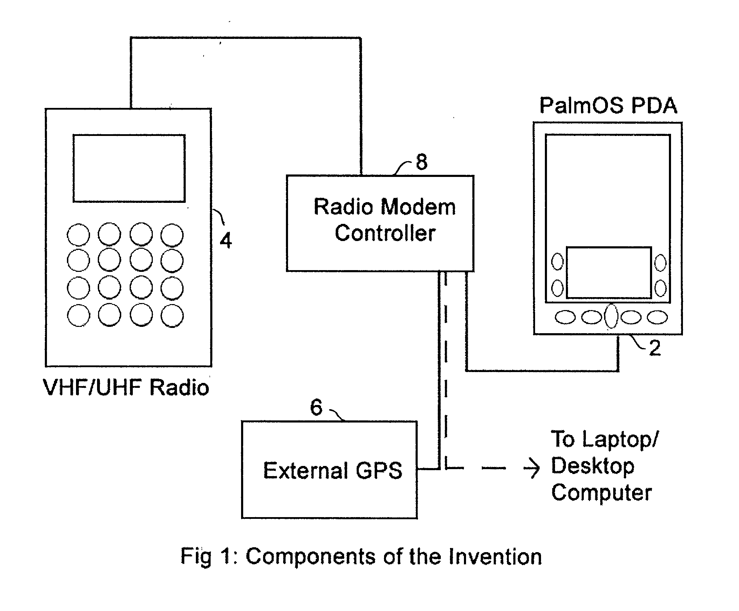

With reference to Fig. 1, the principle components of the system are a Palm PDA computer 2, a VHF/UHF Radio 4, a GPS (Global Positioning System) receiver 6 and a Radio Modem/Controller 8. The Radio 4 and GPS device 6 are interfaced to the PDA 2 through the Modem/Controller 8, which incorporates a TNC (Terminal Node Controller) and a GPS adapter in addition to a radio modem employing MSK modulation. The PDA's 2 programming power can be used not only for text editing and message storage, but also to encrypt all messages and position reports (see below) before transmission. The PDA also provides a user interface, including for example 'in-box' and 'out-box' elements.

The PDA can be a standard, 'off the shelf' device. A PalmV PDA has been preferred in practice, since it has an accessible and simple user interface, is readily available and has a standard serial port which can be used for connection to the Modem/Controller 8. Advantageously, it also has a rechargeable battery. However, other PDAs may be used in its place. Custom software (described further below), in this case written for the PalmOS platform is, however, installed on the PDA.

Similarly, the VHF/UHF radio 6 can be any of a number of readily available models, and the GPS receiver can also be an 'off the shelf' model and may either be a stand-alone device or, alternatively, may be incorporated as an internal device within the modem/controller 8.

The modem/controller 8 in this example is specially designed for use with the PalmOS platform PDA and has the following principle functions:
- The provision of an output, via the radio modem using MSK modulation, to a VHF/UHF transceiver for transmitting and receiving digital data;
- Connection of the serial port of the PDA to either the radio modem or the GPS receiver;
- Charging the internal battery of PDA via a small charger housed within the modem/controller simultaneously with the transmission of data; and
- Turning on the PDA automatically upon reception of new incoming data, e.g. using the Hot-sync feature of the PalmV.

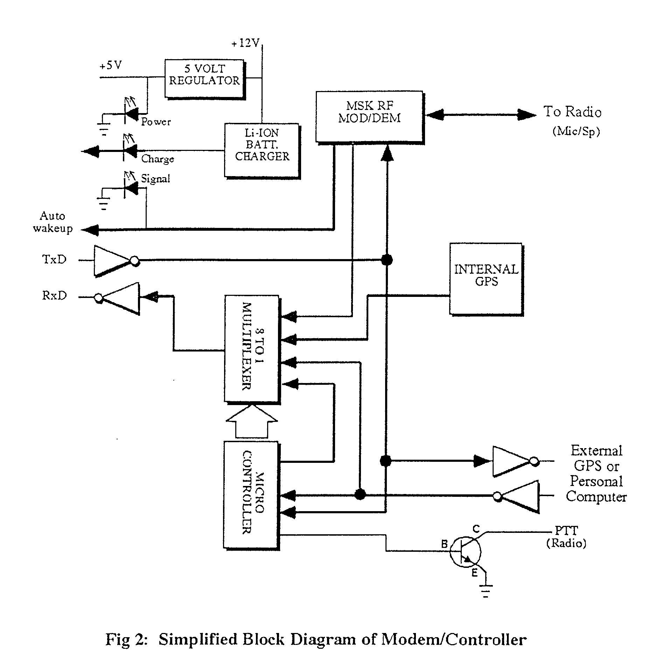

The basic structure of the modem/controller 8 is illustrated in Fig 2. The principle components are:
- A radio modulator/demodulator 10 offering MSK RF modulation/demodulation used to convert digital data received from the PDA to analogue signals, to be sent by the RF transmitter and vice-versa. MSK modulation/demodulation is used instead of the more conventional FSK modems, because of its lower BER and because it is less sensitive to S/N ratios;
- An internal GPS receiver 12 for position reporting, which is a GPS device with standard NMEA output of type GGA or RTC. The GPS is powered by the modem/controller's power supply and its output at TTL level is directly fed to the multiplexer 18 of the controller 16 (see below). (Alternatively, an external GPS may be used, in which case its output is first converted to TTL level by passing through an RS-232 level converter.);
- An internal Li-ION battery charger 14 for charging the battery of the PDA. The charger has current-controlled output and can be turned on or off by an external switch at the user's discretion;
- A serial port controller 16, which serves to control the selective connection of the RF modulator/demodulator 10 and GPS receiver 12 to the serial port of PDA. This controller 16 comprises an 8 to 1 CMOS multiplexer 18, which is controlled by an 8-bit CMOS EEPROM PIC micro-controller chip 20. The micro-controller 20 is controlled by ASCII commands sent by PDA (under the control of the custom software described below) via its serial port. In addition to controlling the multiplexer as a serial port switch, the micro-controller can also control the transceiver's transmit switching (PTT - "Push to Talk"), to instruct an RF transceiver connected to the radio modem to go to transmit mode, preferably in response to a "Request to Send" (RTS) from the PDA; and
- An RS-232 Driver/Receiver Level Translator 22, which serves to convert signal level from RS-232 (from the PDA side) to TTL level used in controller circuit.

The commands that the micro-controller 20 is set up to receive from the PDA, include:
- 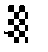 P=0 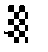 to 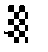 P=7 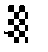 : Commands used to switch ports connected to PDA's serial port , including modem, GPS output, external modem, and a loop back (for test);
- 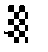 T=0 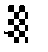 : Receive mode; and
- 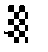 T=1 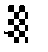 : Transmit mode.

In the illustrated example, the modem/controller 8 also includes an external modem 24, which can be used for an input from an external GPS device, TNC or satellite modem. The micro-controller 20 can control the multiplexer 18 to connect this external modem 24 to the serial port of the PDA. This same serial output port can be used for a connection to another computer, enabling position reports and other messages to be made available to that computer, e.g. a PC, in addition to the PDA. This may be useful, for instance, for display of location information on a map and/or for integration with other applications if desired. The PC may, if desired, be connected to the internet, or other computer or telecommunications network.

The modem/controller 8 also includes, in this example, an indicator, for example an LED 26, to show when a data signal is received by the radio modem. Preferably this indicator is directly controlled by the demodulator 10. The modem/controller 8 also includes means 28, again preferably under the control of the demodulator, to send a signal (e.g. in the case of the PalmV a 2.2V voltage) to the serial port of the PDA to turn the PDA on and start the communications software to receive the incoming data.

Turning now to the software component of the communication system, installed on the PDA, a first program component, in this example written in PIC-assembly code, enables the PDA to communicate with and control the PIC micro-controller over a serial line connected to the PDA's serial port, in particular to control the switching of the multiplexer via the micro-controller to connect the serial port of the PDA to either the radio modem or the GPS.

A second program component installed on the PDA, developed in this example for the PalmOS platform, handles message editing and archiving, automatic message encryption and decryption, control of modem data packet transmission protocols (see below) and full control of the micro-controller. Using a software-based transmission protocols instead of a hardware-based protocols allows upgrades to be implemented faster and more easily and also minimises costs.

The software-implemented protocols have been designed with the aim of providing fast and reliable radio communications over VHF/UHF radio links. Accordingly, the communications protocols have a packet-based structure with error checking capabilities, but the header and error checking segments of each packet are kept to a minimum(only 9 bytes for the header and 2 for error checking in the preferred packet structure described below). This relatively very small message overhead results in higher efficiency and speed for the system. Provision is also provided for automatic encryption and decryption for secure communication.

In the preferred packet structure, each packet is made of three segments: header, body (message data) and error-checking segments.

The header segment is of fixed length (9 bytes), an contains the following information:
- Bytes 1 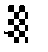 3: a header signature;
- Byte 4: ID of the intended recipient receiving station;
- Byte 5: ID of the sending station;
- Byte 6: Length of the message data segment of the packet in bytes;
- Byte 7: Packet Sequence Number (In descending order) - from which the receiving station can determine how many packets there are in any one message;
- Byte 8: Type of packet:

- Bit 0-3: type of message data: Message, GPS tracking data or GPS request for example;
- Bit 4: 1=first packet of a message, 0=subsequent packets of the message;
- Bit 5: 1=high priority, 0=normal priority;
- Bit 6: reserved
- Bit 7: 1=message response, 0=new message;
- Byte 9: CRC ("cyclic redundancy code") for the header to enable the integrity of the header segment to be checked.

The length of the body segment (i.e. message data) can be variable and is usually 255 or 32,128 bytes. This size is exclusively set by sending station and automatically adopted by the receiving station.

The error-checking segment, at the end of each packet, consists of 2 bytes of CRC, which the receiving station can use to check correct reception of the received packet.

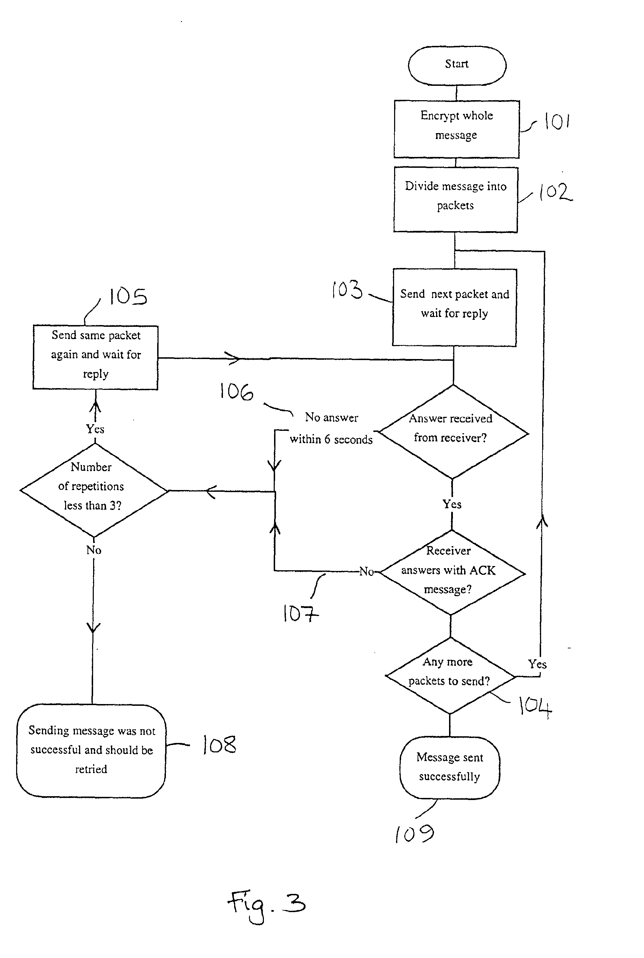

The communication Protocol for transmission of a message from a sending station to a receiving station is illustrated in Fig. 3 and is as follows:
1. The whole message (consisting, for example, of location co-ordinates, subject and the body) is bound together, encrypted and an entry for the message is placed in an 'outbox' list. (101)
2. The encrypted message is divided into a series of discrete, small packets of size 255 or 32,128 bytes (102). This size is independently adjustable by the sending station and needs no adjustment at the receiving end. The 9 byte header and 2 byte error checking segments are added to each packet at this step.
3. Each packet(consisting of the header, body and CRC error-checking segments) is then separately sent and the sending station waits for a confirmation reply from the receiving station after each packet is sent (103).
4. If receiving station responds with an 'OK' acknowledgement message, the sending station sends the next packet if there are more packets to send (104).
5. If one of the following conditions is encountered, the sending station retransmits the last packet sent (105):
   - the sending station does not receive any reply from the receiving station for a predetermined time interval, e.g. 6 seconds (106),
   - the reply from receiving station is received but is not readable, e.g. due to low S/N ratio (107),
   - a reply from receiving station is received but is a request for retransmission of the last package (e.g. a 'not acknowledged' message) (107).
6. If the receiving station does not re-send with an 'OK' acknowledgement the second or subsequent time the packet is sent, it is retransmitted again, up to a maximum number of retransmissions (e.g. three).
7. If after the maximum number of attempted transmission of the packet (e.g. four attempts - the original attempt, plus three re-tries) no 'OK' acknowledgement is received by the sending station from the receiving station, message transmission is discontinued and an error message is displayed (e.g. on the screen of the PDA) to inform the user (108).
8. If a message is received at the sending station from the receiving station indicating that all packets of the message have been received successfully, the sending station (e.g. the PDA component of the system) displays an acknowledgement of the reception of all packets by the other end on it's screen and the entry for the message in the outbox list is checked (109).

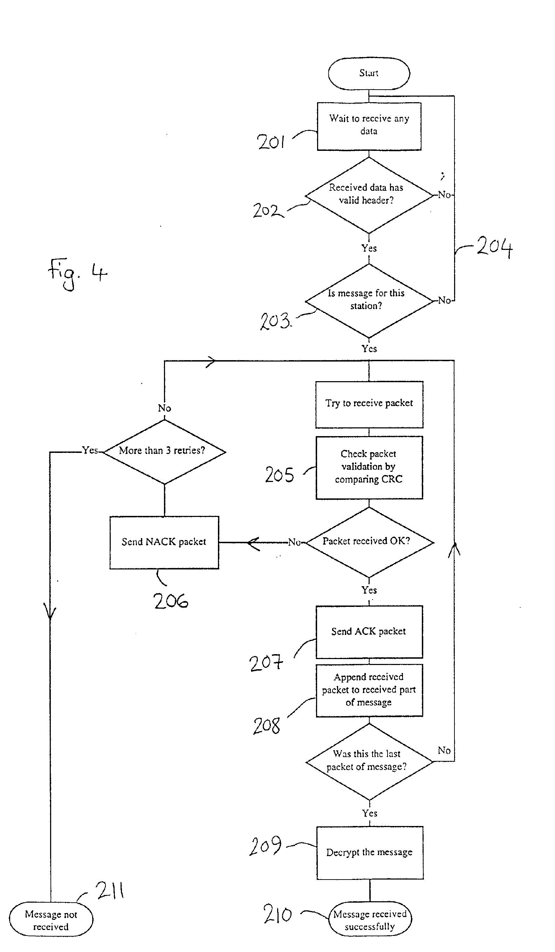

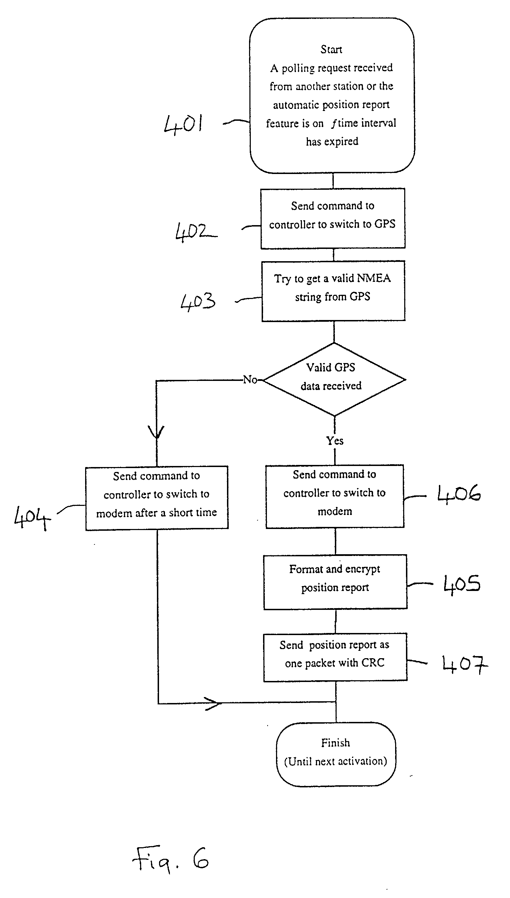

The communication Protocol for reception at a receiving station of a message sent by a sending station is illustrated in Fig. 4 and is as follows:
1. The receiving station is continuously checking the serial port input for receiving a new message signature (three special characters in sequence - bytes 1-3 of the packet header) in any RF signal received (201).
2. After receiving the signature for a new packet, the receiving station authenticates the header (202) and then checks the message type and receiving station ID given in the packet header and acts as follows:
   - if the message is a request for sending a position report (see below), the receiving station automatically connects to the GPS receiver, retrieves the required position information, (if necessary) converts this information from Lat/Long format to UTM format, formats the information into a predefined position report format, encrypts the report and then transmits the encrypted position report (see Fig. 6);
   - if the message is a position report from another station, the report is received, decrypted, and is displayed in a dialog on the screen and also saved as a message in an inbox category of the custom application running on the PDA;
   - if the message is for the station itself, a reception process (3. below) begins (202);
   - if the message is not for the receiving station (i.e. the receiving station ID in the header segment of the packet does not match the ID of the receiving station), the receiving station reacts in one of three ways:

   - if the receiving station is in 'Monitor Mode' (see below), the message is received as a monitored message, the message being received in accordance with the reception process (3. below) but being flagged as a monitored message to distinguish it from messages addressed specifically to the receiving station;
   - if the receiving station is set to be a repeater for sending station from which the packet originates, a repeater protocol (see below) is automatically activated;
   - otherwise the message is ignored (204).
3. In the reception process, the receiving station first receives the header part of the packet and from that, calculates the size of the packet body (byte number 6 in header) and also the number of packets in the message (byte number 7 in header).
4. The body is received (number of bytes to receive is determined by byte number 6 in header).
5. The CRC error-checking segment (final 2 bytes of the packet) for the body is received.
6. CRC for received body is calculated by the receiving station and is compared to CRC extracted from the packet received from the sending station to validate the received data (205).
7. If the received data is not validated, a short 'Not acknowledged' message is sent to the sending station (206), which results in re-transmitting the last packet by the sending station (as described above).
8. If data is validated, a short 'Acknowledged' message is sent (207).
   ('Not acknowledged' and 'Acknowledged' messages are preferably formatted as a 9-byte header, with the 8th byte set to indicate 'Not Acknowledged' or 'Acknowledged').
9. If the link between sending and receiving stations is broken in the middle of a message transmission process, the receiving station will wait for a certain period (which can be a fixed period or calculated based on the number of earlier errors and retransmissions for example). If the link is not re-established prior to expiry of this period, the receiving station prompts the user with an error and exits from receiving mode.
10. After receiving all packets of a message (determined in accordance with the value of header byte number 7 in the packet header), the whole message is reconstructed (or this may be done packet by packet as they are received - 208), the header and error checking segments being stripped from each packet, and then the message is decrypted (209) and stored in the inbox category of the communication application. The user is informed of the newly received message by a pop-up dialog and/or an alarm (210).

As with the transmit protocol, if there are more than three re-tries to receive a packet, the process is aborted (211).

In addition to the transmission and reception protocols set out above, the software installed on the PDA implements protocols for number of other operational modes, namely:
- A 'Monitor Mode' option, which when activated at a receiving station, allows a user of that station to monitor all the messages with one or more particular encryption codes irrespective of whether they are specifically addressed to the receiving station;
- A 'Broadcast Mode' option, which when enabled at a sending station can broadcast a message to all other stations;
- An 'Automatic Position Report Mode' in which a sending station automatically sends, at intervals specified by the user, an encrypted position report including current position (in Lat/Long or UTM), speed and direction;
- A 'Position Report Request Mode', enabling a station to poll an automatic position report from another given station;
- A 'Smart Repeater Mode', which when enabled at a receiving/sending station, controls the station to automatically monitor and receive communications between other specified receiving and sending stations and to transmit one or more copies of any messages that are not received by the other specified receiving station.

A further description of the 'Monitor Mode' is not required here, its operation having already been described in the context of the message reception Protocol described above. Protocols for the other modes implemented in the software installed on the PDA are set out below.

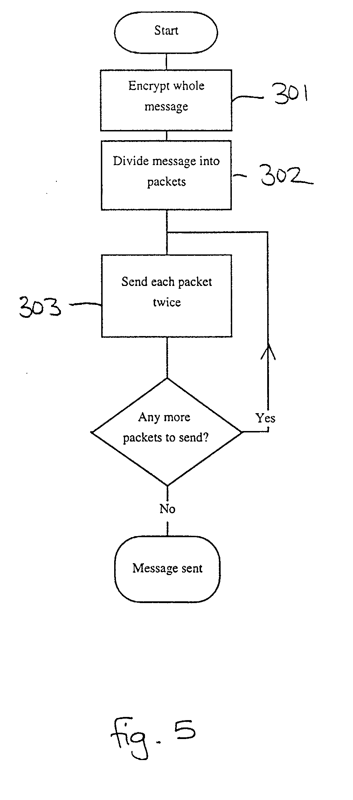

The Protocol for broadcasting messages is illustrated n Fig. 5 and is as follows:
1. When the Broadcast Mode is enabled at a sending station, the receiver ID byte of the header segment of each packet is set to a predefined value (ID '255' for example).
2. The 'broadcast' messages are sent as packets in the same way as normal messages (i.e. encrypted (301) and divided into packets (302) - as described above), but without acknowledgement checking, i.e. the sending station does not expect or wait for a response from any other station before sending subsequent packets of the message. Instead, to increase the chances of correct reception by all receiving stations, each packet of a message is transmitted more than once (e.g. twice) by the sending station in Broadcast Mode (303).
3. At receiving stations, each station receives the message with broadcasting ID '255'. It recognises this ID as a broadcast message and initiates the reception process as set out above, but without sending any reply to the sending station. Once the receiving station correctly receives a packet, it ignores any repetition of the same packet. However, if the first transmission of the packet is not received correctly, the receiving station has one or more chance to receive the broadcast packet.

The Protocol for the Automatic (GPS) Position Report Mode is illustrated in Fig. 6 and is as follows:
1. If this mode is selected by a user, e.g. through a preferences dialog, a timer is set by the system and at time intervals set by the user, automatic position reporting is activated.
2. At the pre-set time intervals, the PDA sends a command (P=2) through the serial port, which is received by the micro-controller inside the hardware (modem/controller) (401).
3. When this command is received by the micro-controller, it switches the serial port connection of the PDA from the radio modem to the GPS (402).
4. The PDA starts receiving GPS output (standard NMEA protocol), and looks for a complete output string of type 'GPRMC' or 'GPGGA' (403).
5. If a valid string of the specified type is not received from the GPS within a timeout period (e.g. 3 seconds), the user is informed by a beep and the PDA sends a command (P=0) to the micro-controller which results in the reconnection of PDA to the radio modem (404).
6. If a valid string of specified type is received from the GPS, it is parsed and transformed into the desired position report format and encrypted automatically (405) and the PDA sends the command (P=0) to the micro-controller through the serial port to switch back to the radio modem (406). The encrypted is position report is then sent via the radio link (407).
7. There is no feedback from the receiving stations, and all stations will receive the position reports if they are within the range of the reporting station.

The Protocol for Position Report Poll Mode is as follows and is also illustrated in Fig. 6:
1. A requesting (polling) station user selects this mode in the application running on the PDA and specifies the ID of the station whose position is required.
2. The PDA sends a short message to the specified station, this message being identified to receiving stations as a Polling message by a special, predefined header.
3. Once the message is received by the specified (polled) station (401), that station automatically starts a process of sending a position report adopting the same protocol that is followed intermittently for in the Automatic Position Report Mode (see above).

By adopting this option for the provision of position reports in response to a specific request from a polling station, location information, as well as speed and direction of travel of a mobile station can be automatically acquired without the need for continuous position transmission by all stations. This minimises that amount if airtime that is taken up by these position reports.

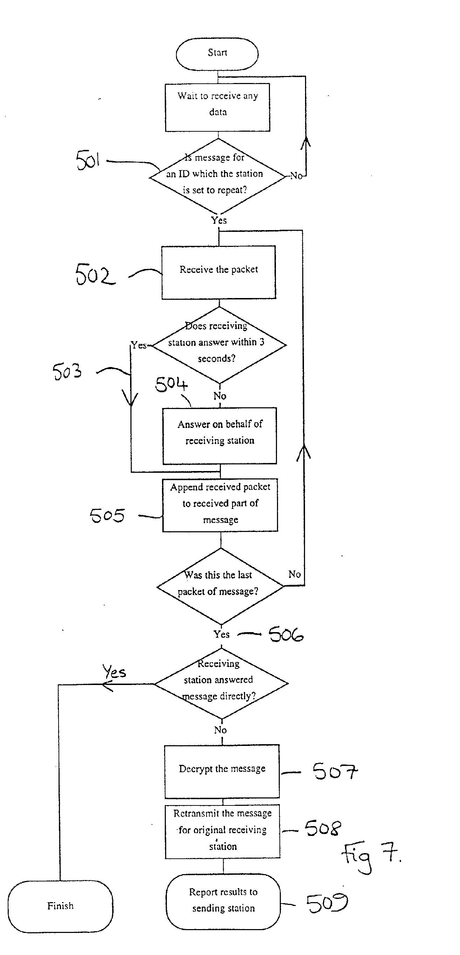

The Protocol for the Smart Repeater Mode is illustrated in Fig. 7 and is as follows:
1. If a sending/receiving station is to serve as a repeater station, the smart repeater option of the PDA is set to on (if desired, the smart repeater mode can be enabled only in respect of a specific list of sending stations for which the repeater station should relay messages - this list can be set by the user for example) (501).
2. When a message is sent from a sending station to a receiving station, the repeater station monitors the contact and temporarily stores each packet as it is sent (502). If the connection between the sending and the receiving stations is established, the repeater station does not take any actions (503).
3. If at any point in the transmission process the receiving station does not receive a packet, the repeater station replies to the sending station on behalf of the receiving station (504) and may either forward its stored copy of the missed packet after a pause of predetermined length (e.g. 3 seconds), or alternatively append the packet to any previously stored packets (505). In the latter case, once the complete message is received by the repeater station (506) then so long as the receiving station has not itself safely received the message also, it can decrypt the message (507) and then itself act as a sending station to send the message to the intended recipient (508) and then respond accordingly to the sending station (509).
4. The smart repeater mode includes a facility which allows the repeater station to be switched for Manual Repeating of Messages. In this mode, messages are received, but retransmission occurs only by the command of the operator of the repeating station.

Using receiving/sending stations as 'Smart Repeaters' in the above manner allows means that the users of the communication system do not need to consider whether a particular message should be sent by making a direct connection with the intended recipient or by using another station as a repeater for the message. Instead, the user simply sends the message, if the receiving station is in range, it responds directly, but if it is not in range, then so long as there is another station in range that has its Smart Repeater Mode activated, it will step in and act as a repeater station, forwarding the message.

In systems being employed as base stations, for example, where a PC is also connected to the PDA via the modem/controller, the PC can itself initiate communication with the PDA. For instance, the PC can send an interrupt to the PIC controller 20, causing it to set the multiplexer 18 to connect the PDA directly to the PC, allowing these two computers to talk to one another. The PC may for example send text messages to the PDA for subsequent encryption and re-transmission or alternatively receive decrypted messages from the PDA. Once the transfer of data between the PDA and PC is complete, the controller 20 instructs the multiplexer to reconnect the PDA wit the modulator/demodulator 10.

Further advantageous features that may be incorporated in embodiments of the present invention are set out below. These may be used individually or in any combination. Each of the features may also be adopted independently of the system described above, in other contexts.

### 1. Providing differential GPS corrections via secure VHF/UHF channel link.

Differential GPS corrections are used to obtain higher accuracy in GPS position determination. To do this, a GPS unit typically includes a serial input for differential data received from a remote site usually via a radio receiver. This data is used by the GPS unit to achieve accuracy in the range of a few meters or less compared to regular GPS which provides positional measurements with 50 to 100m error.

In embodiments of the present invention, instead of setting up a radio receiver separate from the VHF/UHF secure and reliable link, this functionality can be achieved by exploiting the binary protocol of a GPS unit in the following manner:
a) Differential GPS corrections are sent to the modem/controller via the secure VHF/UHF channel;
b) the PDA decodes this information and uses the binary commands of the GPS unit and the extra-dedicated serial input port to the GPS unit to send the received corrections to the GPS unit;
c) to do this, the PDA sends an initial command to the modem/controller to select the input port of the GPS unit as the current port. The command is then issued to the GPS that includes the differential corrections. The GPS unit then uses these corrections to provide more accurate position reports;
d) These reports are then sent to the PDA, which may encrypt them and transmit them via the wireless link.

In this way, the need for an extra radio receiver for receiving differential GPS is eliminated - since the secure wireless link is already available, it is used to send the corrections. This reduces costs in the field units and also eliminates propagation issues and frequency planning associated with the radio receiver.

### 2. Providing a blinking LED to indicate GPS lock in modem/controller

When an embedded GPS is used in the modem/controller, there may be no visual indication of GPS lock. The user has to depend on the PDA to provide a reading of the GPS NMEA output before it can be determined that a lock has been achieved.

However, the embedded GPS unit can be arranged to provide a short pulse (about 1 microsecond wide) every one second when GPS lock has been received. This short pulse can be passed this through a timer that stretches it to a few 100 ms if necessary. Then the (stretched) pulse can be connected to an externally visible LED, e.g. on the front panel of the modem/controller or some other location so that the user can view the blinking LED. The blinking LED indicates that the GPS has achieved lock.

In this way, the user can use the blinking LED to correctly position the receiving antenna to achieve lock. It also provides confidence that the GPS unit is working correctly. It can also be used to indicate the GPS unit is active and drawing power (i.e. it is not in sleep mode). The user can use this information and decide to put the GPS unit to sleep if position information is not required at any time and when battery conservation is paramount. The user can put the GPS unit to sleep (via a switch or through a software command using the PDA that programs the embedded GPS to go to sleep). The cessation of blinking provides feedback that the unit is now asleep.

### 3. Providing a front panel switch to place the embedded GPS unit to sleep for power conservation.

An embedded GPS unit draws power that drains the batteries. If a mechanism is not provided to put the embedded GPS to sleep when GPS readings are not required the batteries will be drained more quickly than necessary.

Preferably, therefore, a front panel locking push button switch is provided such that when it is depressed, cause the modem/controller to be instructed to read the switch status and provide this change of switch status to the PDA on demand. The PDA, based on the status of the switch instructs the embedded GPS to go to sleep or wake up.

In addition to the switch on the modem/controller, a check box may also be provided in a control panel in the PDA user interface that when checked, results in the issuance of a command from the PDA to the embedded GPS unit to place it in sleep mode. When the check box is unchecked, the embedded GPS is issued a command to wakeup.

This ability to place the embedded GPS unit to sleep conserves power. The front panel switch is a simple and convenient way for a user to place the unit in sleep. When this capability is coupled with the blinking LED GPS lock indicator (see above), the user can manage power consumption by also being aware of lock or no lock due to sleep mode when they need to know if GPS is available for reporting.

### 4. Embedded GPS sleep within period of Interval Reporting or On Demand position request, controlled by PDA.

As already noted above, if the embedded GPS is left on all the time, it will drain the battery. Usually, GPS data is needed either over long intervals or on demand. Therefore, it is advantageous to make the GPS go into sleep mode between intervals or when a read is not requested.

The PDA can preferably, therefore, command the GPS to go to sleep mode via the embedded GPS serial input line using a specific protocol. When a reading is needed it can wake up the embedded GPS unit, wait for a valid read, get it, and then put it back to sleep. The PDA can also determine, based on the interval, whether it is advantageous to put the GPS to sleep or not.

In this mode, a backup battery can power the GPS unit and store the latest GPS reading during the sleep interval. Therefore, when the GPS unit wakes up, it can achieve a reading much faster than a cold start.

The PDA control panel can provide a means, a user interface check box for example, to turn this feature on or off.

Adopting this feature can give the benefit of a significant reduction of power consumption leading to longer battery life.

### 5. Periodic sleep-wakeup of PIC microcontroller to conserve power

The PIC microcontroller also consumes power. However, the PIC does not need to be "on" all the time. There are times in which it needs to monitor events and immediately react or report them. But even these events can be captured with a delay without a problem. Therefore, instead of keeping the PIC on all the time, the PIC can go to sleep for a short interval, wakeup and check for activity, and then return to sleep if there is no activity. These activities include the PDA trying to communicate with the PIC, an exception event such as a change of state in a digital line, or an interrupt.

To enable this functionality, a timer in the PIC is used. The PIC is taken into sleep mode. After the timer expires, the PIC is awakened. The PIC checks for activity. If no activity exists, the timer is restarted and the PIC goes to sleep.

In case the PDA communicates with the PIC while it is asleep, it may not respond. The PDA will detect this and continue to try to communicate until the PIC wakes up. After the PIC wakes up it will respond to the PDA. When a transaction has been started with the PDA, the PIC will not go to sleep for an anticipated time so that it can respond quickly to the PDA commands.

When the PIC detects little activity from the PDA it resumes the sleep-awaken schedule.

The PDA can be used to turn the periodic sleep-awaken function of the PIC off if desired. For example, in the case that the modem/controller is used as a base station with a computer connected to the serial port, the sleep mode can be turned off so that interrupts from the computer can be handled. In a base station, there is typically ample power available unlike in a person portable system.

### 6. Voice Over-ride

When the PDA and modem/controller are transmitting data over the radio channel, a mechanism can be provided for overriding the data transmission when voice communication is desired. The data transmission should desirably resume after termination of the voice transmission.

Thus, when a user decides to communicate via voice in a two-way radio network, they push a PTT button (Push to Talk). A circuit detects that the PTT has been activated and signals the PDA via the Clear to Send (CTS) signal that the PTT has been pressed. The PDA monitors the CTS signal and immediately backs off from data communication. It stores the status of the data communication state. It continues to monitor CTS and when CTS is clear it resumes the data transmission.

When PTT is pressed, the circuitry immediately disconnects the modem/controller data modem output from the radio audio input. It connects the headset mic output to the radio audio input. Thus regular two-way voice communication can be commenced.

The PDA does not immediately resume data communication after CTS is cleared and releases PTT in case another party responds to the voice activity. After a short time interval it will resume data communication provided that CTS is clear.

To provide back off when a remote radio communicates via voice, the radio squelch signal is monitored. If it is active indicating remote voice activity or data transmission, the CTS signal is negated. The PDA monitors the CTS signal and will back off if it indicates activity. Data transmission resumes after inactivity is detected.

There are three sources of activity which result in data transmission backoff:
a) PTT pressed.
b) Carrier detect by modem indicating data reception.
c) Squelch indicating voice activity or other activity over the channel.

All three events result in negation of the CTS signal (an OR operation) on CTS.

In the system, once the PDA detects that CTS has been negated, it can query the modem/controller to determine what event among many caused the CTS to be negated. The modem/controller has a microcontroller, which has as inputs digital lines that it can read. The PTT pressed, CD detect and Squelch indicators are connected to these independent digital lines. The microcontroller, upon receiving a command from the PDA returns the status of these lines.

The PDA in turn, can provide user interface indicators using icons for example to let the user know what is the source of activity. The PDA can also affect the back off policy based on the source of the activity.

This voice-override and traffic activity monitoring can provide a number of benefits:
a) Priority for voice communication over data without loss of data transmission transaction.
b) Data Collision avoidance in certain circumstances.
c) Graphical indicators of nature of channel activity to user.
d) Backoff logic tied to nature of activity which can differ.

### 7. Software change of Baud rate

The modem/controller can be designed such that the PIC microcontroller controls a digital output line connected to the radio modem baud rate control. The modem/controller is designed such that by setting this line to a logical one the baud rate is 1200 bps for example. If it is a logical zero then it is 2400bps for example. The modem/controller takes care of other circuitry that needs to be setup to change the baud rate.

A control panel can be provided via the graphical user interface such that the baud rate can be set using a check box for example.

In addition, since the PDA can command the modem/controller to change baud rate, the PDA can first attempt to communicate at higher rate. If it fails it can then attempt lower rate.

Adopting this software approach to controlling baud rate avoids the need for jumpers to set baud rate. Software control also allows automatic selection of higher rate in good conditions.

### 8. The usage of a common communication engine which handles all the common communication tasks in the background.

In some embodiments of the system, two or more separate applications may be used for handling different data types (e.g. one for handling text messages and one for handling maps and geographic data). Both types of data need to be communicated to other locations over the radio link. It is possible for each data handling application to have its own communication processes, however the communication tasks (including encryption/decryption, communication protocol and its settings and preferences for example) for both applications are the same. Thus it is preferred to use a shared resource for the communication aspects of the system.

However, the PalmOS does not support multitasking, and it is not therefore possible to run a communication application in the background as a separate task.

It would also be undesirable to merge the separate data handling applications (another way of achieving the desired end result of a single communication application). This is because merging the two applications into one single application would result in an unnecessarily large application, loss of scalability, cumbersome application code management and updating, and a complex user experience.

Preferably, therefore, the system is configured as follows:
a) a separate application is provided for handling all the communication and encryption tasks;
b) to get around the lack of support in the PalmOS for background tasks:
   1) the serial port is opened in the new separate communication application and its reference number is saved in a 'Feature' (using the Feature Manager in the PalmOS) for later reference. The serial port is left open after exiting from the application.
   2) The wakeup handler function in the new serial manager of PalmOS is used for calling the required routines in the background.
   3) Because the wakeup handler is called during the interrupt time and therefore none of the system functions can be used except key events, a special key event with highest priority is generated in the called function.
   4) By using the 'Notification' system of the PalmOS, another function of the application is called in the appropriate time by the system and receiving of the new data is handled.
   5) Because in this situation, the communicating application is called as a sub-routine, it has no access to global variables. Therefore, all the global data is saved and handled by using 'Feature' and 'Memory' management functions of PalmOS.
   6) Also, as the functions that are normally used for receiving data from the serial buffer don't work in the situation mentioned above, the functions are replaced with similar custom routines which use lower-level calls to the PalmOS.
   7) As in this situation, no user input is acceptable by using the standard functions, low-level system calls are used to enable cancellation of the receive process by the user.
c) After receiving the data and decryption, it is passed to the appropriate application (e.g. PTMail or PTMap, the respective data handling applications for text data and map/geographical data respectively) to be handled. The application the data belongs to is recognised by a flag in the header of the data.
d) For sending data, the appropriate application (PTMail or PTMap) calls the communication application (PTComm) as a sub-routine, passing the data to be sent at the same time.

This approach has the benefits that common code and settings can be used for handling encryption and communication needs for all data types/data handling applications, making support, management and upgrade of code and protocols, easier. Reception of data from the serial port in all situations including when the user is using another application or when one of the system routines or modal dialogs is active is also possible. Furthermore, any type of data (messages or geographic data) can be received at any time and saved by the corresponding application.

### 9. A special, compact protocol for saving freehand data as a geographic object

Geographic data is defined by coordinates. For freehand drawings, this means registering the geographic coordinates for each point where the drawn line turns an angle. As the data representation of each geographic point (using either Lat-Long or UTM projections) needs 8 bytes, this results in a large array of data for a freehand drawing which would be inefficient for transmission over a VHF radio link.

A compressed data format is therefore preferably employed. For instance, in a palm device with a screen of 160 x 160 pixels, only the geographic coordinates for the centre point of the area displayed on the screen need be saved and all other points can be saved as a 2 byte coordinate of the screen's pixel relative to the centre of the screen. Also, to extract the true geographic coordinates at any given scale, the scale of the area displayed is also saved with high precision.

In this way, the overall size of the freehand object created on the Palm is reduced to just slightly more than a quarter (a quarter+12bytes) of the original data. (i.e. the size of a freehand object with 100 points is reduced from 800 bytes to 212 bytes). This is without any loss of geographic information. Also, because no special compression methods are used, the access time and performance is not reduced.

### 10. Implementing a UDP server in a single threaded operation system such as the PalmOS

In order that more than one Palm application can access the underlying communication layer, a UDP server is preferably provided to operate as a background process in the Palm device. However, as already indicated above, the PalmOS is a single threaded operating system, and this need for a "background" application poses a challenge.

In order to address this in preferred embodiments of the invention, when a user initiates a message transmission request (i.e. send message, GPS or geographic data), the PTComm application establishes a UDP network connection and saves the connection reference using the Feature facility of PalmOS. It then initialises an alarm procedure to check the connection at regular intervals and exits without closing the connection, thereby relinquishing control to the calling Palm application.

The PalmOS calls the above alarm procedure (within the PTComm application) at the set intervals. The procedure then checks for incoming UDP packets and if any valid packets exist, determines the destination application based on the header information and forwards the packets to the destination application. Since the execution of the above procedure is very short, the user will not notice it.

Simultaneous with the connection initialisation a timer is also initialised based on user settings. This timer is checked by the alarm procedure at the regular intervals that the procedure is called and is reset with any incoming or outgoing packets. If the timer has reached the user set time interval then the UDP network connection is brought down and the alarm feature is turned off.

A new network connection is re-established with a subsequent user request for message transmission.

This approach has several benefits:
a) The system can utilise diverse communications links (i.e. VHF/UHF, GSM, GPRS, etc) without any changes needed in the overlying applications.
b) Multiple Palm applications can utilise a common IP network connection.
c) The user can receive incoming network messages while she/he is working in any other application.

It will be appreciated that although reference is made above to receiving stations, sending stations, polling stations and repeater stations, the communication system of the preferred embodiment of the invention can serve as any and all of these forms of station.

Thus, in view of the above, it can be seen that the invention, in its preferred embodiments is able to provide a wireless communication system that can offer:
- Digital message transmission over VHF/UHF radios with automatic encryption and decryption at both ends.
- Automatic encrypted transmission of mobile stations' geographic location in terms of geographic co-ordinates.
- Portability by an individual.
- Simplicity and ease of use.
- Minimum power requirements.
- High Reliability RF Messaging with Message Delivery Status Report
- Long distance communication with fully automatic relaying (repeating).
- Graphical User Interface for incoming and outgoing message management for RF communications.

It will be appreciated that various modifications can be made to the exemplary embodiment described above without departing from the present invention. For instance, the modulator used need not necessarily be of the MSK type and can, for example, be an FSK modem instead. Likewise, the switching function need not necessarily be achieved using micro-controller controlled multiplexer - many equivalent electronic circuits will be available to the skilled person.

## Claims

1. A system for wireless transmission of data, including position data, the system comprising:
(i) a hand held digital computer;
(ii) a position-locating device providing position information to the digital computer;
(iii)a VHF and/or UHF radio frequency transmitter; and
(iv) a radio modem having an input for digital data from the hand held digital computer, a modulator for converting digital data from the computer into a modulated analogue RF signal, and an output connected to the transmitter for transmission of said modulated signal.

2. A system according to claim 1, wherein said digital computer comprises means for controlling operation of said radio modem.

3. A system according to claim 2, wherein said control means comprises software installed on said digital computer.

4. A system according to any one of the preceding claims, comprising radio receiver connected to the radio modem, the modem including a demodulator for demodulating a received RF signal and converting it to digital data for input to the digital computer.

5. A system according to claim 4, wherein a radio transceiver serves as both the radio receiver and transmitter.

6. A system according to claim 4 or 5, wherein said digital computer is of a type having a 'sleep mode', said radio modem including wake-up means for waking the computer from said 'sleep mode' on receipt of an RF signal by said radio receiver.

7. A system according to claim 6, wherein said wake-up means transmits a wake-up signal to the digital computer prior to transmission of a demodulated signal to the computer.

8. A system according to any one of the preceding claims, wherein the hand held digital computer is a 'palmtop' or other 'Personal Digital Assistant'

9. A system according to claim 8, wherein said 'palmtop' or 'Personal Digital Assistant' operates the PalmOS platform and wherein transmission of data is initiated by activating a 'Request to Send' feature installed on the PalmOS platform, which causes a Push-to-Talk signal to be sent to the radio transmitter.

10. A system according to claim 8, when dependent on claim 6 or 7, wherein said 'palmtop' or 'Personal Digital Assistant' operates the PalmOS platform and wherein the wake-up signal is sent using the Palm Hot-sync feature.

11. A system according to any one of the preceding claims, wherein the position-locating device is a GPS device.

12. A system according to claim 11, wherein said GPS device is adapted to provide differential GPS corrections, differential data for the GPS device being received via said radio receiver.

13. A system according to any one of the preceding claims, wherein the position location device is connected to the digital computer through the radio modem.

14. A system according to any one of the preceding claims, wherein said digital computer has an 'always on mode' and a 'sleep mode', the computer being controllable to operate in a selected one of these modes.

15. A system according to any one of the preceding claims, wherein the digital computer is powered by a rechargeable battery and the radio modem comprises charging means for charging said battery simultaneously with data exchange between the computer and the modem.

16. A system according to any one of the preceding claims, further comprising a second digital computer which can be interfaced to the hand held digital computer through the radio modem to receive data from and transmit data to the hand held computer.

17. A system according to claim 16, wherein said second digital computer is a Laptop PC or a Desktop PC or a Network Workstation.

18. A system according to claim 16 or 17, wherein said second digital computer is connected to a computer or telecommunications network.

19. A system according to any one of the preceding claims, wherein one or more of the system components has a 'sleep' mode in which its power consumption requirements are less than in a normal operating mode but in which the component can be returned to a normal operating mode without human intervention.

20. A system according to claim 19, wherein the position locating device has a 'sleep' mode.

21. A system according to any one of the preceding claims, wherein the radio transmitter/receiver is used for voice communication in addition to data communication, the system comprising means to over-ride and interrupt data transmission/reception, to allow voice transmission/reception.

22. A system according to any one of the preceding claims, adapted for handling more than one type of data, the system comprising a separate application to handle each different data types, and a shared communication engine for communicating two or more data types.

23. A system according to any one of the preceding claims, adapted to handle geographic data defined by coordinates, the system storing the absolute geographic coordinates for only a predetermined portion of the data, other geographic points being defined relative to the geographic coordinates of the predetermined portion.

24. A modem to provide an interface between a hand held digital computer, a radio frequency transmitter and/or receiver and a position locating device, the modem comprising:
(i) an input/output port for connection to a communication port of the hand held digital computer;
(ii) a modulator and/or demodulator for converting digital data to a modulated radio frequency signal and/or for converting a modulated radio frequency signal to digital data;
(iii)an input for data from the position-locating device;
(iv) a switch for selectively connecting (a) the modulator and/or demodulator to said input/output port, or (b) the position locating device input to said input/output port; and
(v) a controller for controlling the operation of the switch.

25. A modem according to claim 24, wherein said position locating device is an internal component of the modem.

26. A modem according to claims 25, comprising an external indicator to indicate that the position location device has successfully located its position.

27. A modem according to claim 24, 25 or 26, wherein said digital computer is of a type having a 'sleep mode', said radio modem comprising wake-up means for waking the computer from said 'sleep mode' on receipt of an RF signal by said radio receiver.

28. A modem according to claim 27, wherein said wake-up means transmits a wake-up signal to the digital computer prior to transmission of a demodulated signal to the computer.

29. A modem according to claim 28, wherein said hand held digital computer is a 'palmtop' or other 'Personal Digital Assistant' operating the PalmOS platform and wherein the wake-up signal is sent using the Palm Hot-sync feature.

30. A modem according to claim 28 or 29, wherein said demodulator has a 'carrier detect' feature responsive to an RF carrier signal received by the radio receiver and the wake-up signal is initiated by said 'carrier detect' feature when an RF carrier signal is received.

31. A modem according to any one of claims 24 to 30, wherein said controller has a 'packet recognition' feature responsive to demodulated data arriving at the switch from the demodulator and the wake-up signal is initiated by said 'packet recognition' feature on arrival of demodulated data.

32. A modem according to any one of claims 24 to 31, comprising a second input/output port for connection to a second digital computer, said switch being operable by the controller to connect said second input/output port to said port for the hand held digital computer.

33. A method for the wireless transmission of a message from a sending station to a receiving station, the method comprising:
(i) at the sending station, dividing the message into a number of discrete data packets;
(ii) sending a data packet by radio transmission from the sending station to the receiving station;
(iii)waiting for acknowledgement from the receiving station that the packet has been received;
(iv) once receipt of the packet has been acknowledged, sending a subsequent packet to the receiving station; and
(v) repeating steps (iii) and (iv) until all of the data packets have been sent.

34. A method according to claim 33, wherein each data packet includes, in addition to the message data, a header, comprising data giving information about one or more of: an address of the receiving station; an address of the sending station; the length of the message data; and the number of data packets into which the message has been divided.

35. A method according to claim 33 or 34, wherein said header includes information defining a message type.

36. A method according to any one of claims 33 to 35, wherein each packet includes check data, which can be used to test the integrity of the packet when it is received at the receiving station.

37. A method according to any one of claims 33 to 36, wherein said message is encrypted prior to its division into discrete packages.

38. A method according to any one of claims 33 to 37, wherein the size of the message data part of each packet is set by the sending station, the length of this segment of the packet being given in the packet header.

39. A method according to any one of claims 33 to 38, wherein if an acknowledgement of safe receipt of any packet is not returned by the receiving station, the sending station retransmits the packet automatically.

40. A method for receiving at a receiving station a message transmitted as a series of radio data packets from a sending station, each packet comprising a message data segment and a header, the header containing information including the address of the intended recipient of the message and the length of the message data segment, the method comprising:
(i) detecting receipt at the receiving station by a radio receiver of the first packet of a new message;
(ii) determining from the packet header whether the receiving station is the intended recipient of the message, and if it is;
(iii)determining from the packet header the length of the message data segment of the packet;
(iv) extracting and storing the message data from the packet; and
(v) transmitting an acknowledgement of receipt of the package to the sending station.

41. A method according to claim 40, wherein the packet header also includes an indication of how many subsequent packets of the complete message there are yet to be received.

42. A method according to claim 40 or 41, wherein each packet includes check data which can be used by the receiving station to test the integrity of the packet, comprising the further steps of checking the integrity of the received package and if the data packet is not correctly received, transmitting a 'not acknowledged' message to the sending station.

43. A method for the wireless broadcast of a message from a sending station, the method comprising:
(i) at the sending station, dividing the message into a number of discrete data packets;
(ii) labelling each packet as a broadcast packet;
(iii)transmitting a first data packet by radio transmission from the sending station;
(iv) transmitting at least one copy of the first data packet after a predetermined delay following transmission of the first data packet; and
(v) transmitting subsequent data packets, the transmission of each subsequent data packet being followed by the transmission of a copy of the packet prior to transmission of the next subsequent data packet.

44. A wireless communication system according to any one of claims 1 to 23, wherein said radio modem is a modem according to any one of claims 24 to 32.

45. A wireless communication system according to any one of claims 1 to 23, comprising control means to enable the system to operate in accordance with one or more of the methods of any of claims 33 to 43.

46. A system according to claim 45, wherein said control means comprises software installed on the hand held digital computer.

47. A system according to claim 45 or 46, wherein said control means is operable to automatically transmit, at predetermined intervals of time, a position report containing information about the location of the system, obtained from the position device.

48. A system according to any one of claims 45 to 47, wherein said control means is operable cause the system to request the position of another station.

49. A system according to any one of claims 45 to 48, wherein said control means is operable cause the system to act as a repeater station.

50. A system according to claim 49, wherein said control means controls the system to monitor communications between a sending station and a receiving station and to act as a repeater station when there is a communication failure between the stations.
